# DEMANDE DE BREVET EUROPEEN

(11) **EP 1 737 260 A2**
(43) Date de publication de la demande: **27.12.2006**
(21) Numéro de dépôt: 06114681.7
(22) Date de dépôt: 30.05.2006
(51) Int. Cl.: H04Q 7/32, H04M 3/493, H04M 1/725, H04L 29/06

(54) **Terminal mobile multimode à sélection automatique d'interface de réseau d'accès radio**

(30) Priorité: 07.06.2005 FR 0551523
(71) Demandeur: ALCATEL, 75008 Paris (FR)
(72) Inventeur: MAILLARD, Hervé, 91430, IGNY (PF)
(74) Mandataire: El Manouni, Josiane

(57) **Abrégé**

Un terminal mobile de radiocommunication (MS) comprend i) un système d'exploitation (OS), ii) au moins une application interne (IA1) pour l'échange de données avec au moins une application externe (EA) implantée dans un équipement de réseau (SE), iii) au moins deux interfaces réseau (NI1,NI2) couplées au système d'exploitation (OS), disposant chacune d'une adresse et pouvant être respectivement connectées à des réseaux d'accès radio (RAN1,RAN2), de types différents et raccordés à un réseau fédérateur (IPN) auquel est couplé l'équipement de réseau (SE), et iv) des moyens de contrôle (CM) assurant une fonction « proxy » d'interfaçage entre applications interne (IA1) et externe (EA) et chargés, chaque fois qu'ils reçoivent une demande de transaction provenant de l'application interne (IA1) et désignant une application externe (EA), de déterminer parmi les interfaces de réseau (NI1,NI2) celle qui est adaptée à la transaction en fonction d'informations de contrôle et d'informations de routage, puis d'ordonner au système d'exploitation (OS) de transmettre la demande de transaction à l'application externe (EA) désignée via une connexion de niveau transport entre l'interface de réseau déterminée et l'équipement de réseau (SE) contenant l'application externe (EA).

## Description

L'invention concerne les ensembles de réseaux de communication radio couplés entre eux par l'intermédiaire d'un réseau fédérateur, et plus précisément le contrôle de l'accès de terminaux mobiles à des réseaux d'accès radio pour communiquer avec des applications externes pendant des sessions de service.

On entend ici par « terminal mobile » tout terminal de radiocommunication mobile ou portable capable d'échanger des données sous la forme de signaux radio, soit avec un autre terminal ou équipement de réseau, via leur(s) réseau(x) de rattachement, soit avec son propre réseau de rattachement. II pourra donc s'agir, par exemple, de téléphones mobiles, ou d'ordinateurs portables ou d'assistants personnels numériques (ou PDA) équipés de modules de communication radio.

Certains terminaux mobiles, dits multimodes, sont agencés de manière à pouvoir accéder à plusieurs (au moins deux) réseaux d'accès radio différents. Par exemple, ils sont adaptés aux communications, d'une part, GPRS/EDGE et/ou UMTS, et d'autre part, WLAN et/ou WiFi et/ou WiMAX. Ces terminaux disposent donc de plusieurs interfaces de réseau définies par exemple sur des cartes électroniques de communication (de type téléphonique (GPRS/EDGE ou UMTS) ou de type PCMCIA (WiFi ou WiMAX)) qui leur permettent de se connecter aux réseaux d'accès radio correspondants. Il est également possible de constituer un « terminal multimodes » à partir d'une combinaison de deux terminaux mobiles, comme par exemple un téléphone mobile connecté par un port série à un ordinateur portable (ou « laptop »).

Par exemple, lorsque le réseau fédérateur, auquel sont couplés les réseaux d'accès radio, est à protocole Internet (ou IP), les terminaux multimodes peuvent se raccorder, via ces réseaux d'accès radio, à des équipements de réseau couplés au réseau Internet et comportant des serveurs d'applications externes (ou sites Internet), afin d'échanger des données avec ces serveurs. A titre d'exemple illustratif, une application externe peut être dédiée à la transmission de musique ou de film (« streaming » - transfert de flux de données audio, video et analogues).

Pour que l'utilisateur d'un terminal multimodes puisse télécharger des données gérées par une application externe distante, son terminal doit disposer d'une application interne, comme par exemple un navigateur Internet (ou « web browser »), capable d'initier ce que l'on appelle une session de service avec ladite application externe.

Comme le sait l'homme de l'art, une session de service est constituée de transactions (de service) de types différents, définies par des caractéristiques propres et auxquelles sont associées des sémantiques de service. La sémantique de service définit le sens d'une transaction donnée compte tenu de l'application concernée. Par exemple, une transaction peut consister à rechercher un site Internet, ou une page donnée d'un site Internet, ou à demander la transmission d'un film, ou encore à demander l'arrêt provisoire ou définitif, de la transmission d'un film.

Chaque transaction émanant d'une application demandeuse (interne ou externe) doit être transmise à l'application demandée (externe ou interne) qu'elle désigne, via une connexion dite de niveau transport (ou « socket ») établie entre les équipements (par exemple un terminal multimodes et un serveur d'applications) dans lesquels les applications demandeuse et demandée (interne et exteme) sont implantées.

Or, au cours d'une même session des transactions successives, de types différents ou non, ne requièrent pas forcément l'utilisation d'une même connexion (de niveau transport) de haut, voire très haut, débit. Par exemple, il est inutile d'utiliser une connexion de très haut débit pour transmettre une demande d'arrêt provisoire ou définitif de transmission de données vidéo, laquelle nécessite une telle connexion.

De même, dans certaines circonstances, il serait souhaitable d'attendre pendant un cours instant qu'un accès à une connexion haut débit soit possible plutôt que d'initier immédiatement une session avec une connexion de débit inférieur induisant une moins bonne qualité de restitution. Par exemple, lorsqu'un terminal bimodes UMTS/WiFi est déplacé dans une zone où sont situés des « points chauds » (« ou hot spots ») WiFi, il serait avantageux d'attendre de lui transmettre des données vidéo à haut débit, via le réseau d'accès WiFi, chaque fois qu'il parvient dans un hot spot.

Il résulte de l'analyse qui précède qu'il serait particulièrement avantageux de pouvoir choisir le réseau d'accès radio qui est adapté à chaque transaction qu'un terminal multimodes souhaite effectuer. Or, tel n'est pas le cas aujourd'hui.

En effet, les terminaux multimodes, tels que les ordinateurs portables (ou « laptops ») et les PDAs, sont actuellement agencés de manière à choisir l'interface de réseau, qui doit être utilisée pour accéder à une application demandée, en fonction de l'adresse de destination de l'équipement dans lequel cette application demandée est implantée et de la route (ou du chemin) qui est notamment associé(e) à cette adresse de destination dans la table de routage du terminal multimodes.

Par conséquent, lorsqu'une telle route existe dans la table de routage, l'application demandeuse est contrainte de choisir l'interface de réseau qui est connectée au réseau d'accès radio par lequel passe cette route. Lorsque cette route n'existe pas dans la table de routage, l'application demandeuse est contrainte d'utiliser une route par défaut qui est liée à une interface de réseau assurant la connectivité à un unique réseau d'accès radio. Ainsi, dans la pratique l'interface de réseau liée à la route par défaut est systématiquement utilisée, exceptée lorsqu'elle n'est pas disponible.

Dans les terminaux multimodes actuels, l'application (interne) demandeuse ne peut donc pas contrôler les interfaces de réseau qui sont utilisées pour effectuer les transactions.

Pour tenter d'améliorer la situation, la société ALCATEL a proposé de modifier, d'une part, le système d'exploitation des terminaux multimodes afin d'enrichir la couche dite « socket API » (interface de programmation d'application de connexion de niveau transport, et d'autre part, les applications internes afin qu'elles puissent mettre en oeuvre des mécanismes de sélection de réseau d'accès capables d'utiliser les modifications apportées à la couche socket API. Cette solution contraint les fabricants des applications internes des terminaux multimodes à modifier leurs applications et ne permet pas aux opérateurs des réseaux d'accès radio d'intervenir dans le mode de sélection de leurs réseaux d'accès radio, ce qui limite notablement les critères de sélection.

L'invention a donc pour but d'améliorer la situation.

Elle propose à cet effet un terminal mobile (de radiocommunication) multimodes, comprenant un système d'exploitation, au moins une application interne pour l'échange de données avec au moins une application externe implantée dans un équipement de réseau, au moins deux interfaces réseau couplées au système d'exploitation, disposant chacune d'une adresse et pouvant être respectivement connectées à des réseaux d'accès radio, de types différents et raccordés à un réseau fédérateur auquel est couplé l'équipement de réseau.

Ce terminal mobile multimodes se caractérise par le fait qu'il comprend des moyens de contrôle assurant une fonction « proxy » d'interfaçage entre applications interne et externe et chargés, chaque fois qu'ils reçoivent une demande de transaction provenant de l'application interne et désignant une application externe, de déterminer parmi les interfaces de réseau de son terminal celle qui est adaptée à la transaction en fonction d'informations de contrôle et d'informations de routage, puis d'ordonner au système d'exploitation de transmettre la demande de transaction à l'application externe désignée, via une connexion de niveau transport (ou socket) entre l'interface de réseau déterminée et l'équipement de réseau contenant l'application externe.

On entend ici par « fonction proxy » un module intercalé entre deux applications et se faisant passer pour l'une des deux applications auprès de l'autre, et réciproquement, conformément à la définition donnée par l'IETF.

Le terminal mobile multimodes selon l'invention peut comporter d'autres caractéristiques qui peuvent être prises séparément ou en combinaison, et notamment :
- ses moyens de contrôle peuvent être chargés, d'une première part, de sélectionner une interface de réseau en fonction des informations de contrôle, d'une deuxième part, de vérifier parmi les informations de routage (stockées dans la table de routage du terminal) quelle serait l'interface réseau qui serait utilisée dans le cadre d'une communication vers l'équipement de réseau contenant l'application externe concernée par la transaction demandée, et d'une troisième part, d'ordonner le stockage dans la table de routage d'informations de routage définissant une route impliquant l'utilisation de l'interface réseau sélectionnée, si une telle route n'est pas définie dans ladite table ;
   ➢ en cas d'indisponibilité de l'interface de réseau sélectionnée, ses moyens de contrôle peuvent être chargés de déterminer une autre interface de réseau en fonction des informations de contrôle et des informations de routage ;
- ses moyens de contrôle peuvent être chargés de déterminer l'interface de réseau au moyen de commandes systèmes transmises au système d'exploitation ;
- ses moyens de contrôle peuvent être agencés sous la forme d'une application logicielle de type proxy téléchargeable. Dans ce cas, le système d'exploitation est agencé, d'une première part, pour recevoir l'application logicielle de type proxy d'un équipement de réseau auxiliaire distant, d'une deuxième part, d'implanter cette application logicielle de type proxy dans le terminal à une adresse interne choisie, et d'une troisième part, de communiquer l'adresse interne choisie à chaque application interne de sorte qu'elle puisse communiquer avec l'application logicielle de type proxy ;
- les données de contrôle peuvent être stockées dans un équipement de réseau auxiliaire distant. Dans ce cas, ses moyens de contrôle sont chargés de requérir auprès du système d'exploitation l'établissement d'une connexion de signalisation entre le terminal et cet équipement de réseau auxiliaire afin qu'il puisse leur transmettre les données de contrôle ;
   ➢ ses moyens de contrôle peuvent être chargés de requérir les données de contrôle auprès de l'équipement de réseau auxiliaire, via la connexion de signalisation, afin de les stocker dans des moyens de mémorisation du terminal ;
   ➢ dans une première variante, ses moyens de contrôle peuvent être chargés de stocker dans des moyens de mémorisation du terminal les données de contrôle qui sont transmises par l'équipement de réseau auxiliaire (à son initiative), via la connexion de signalisation ;
   ➢ dans une seconde variante, ses moyens de contrôle peuvent être chargés de requérir auprès de l'équipement de réseau auxiliaire, via la connexion de signalisation, les données de contrôle qui sont nécessaires à la détermination d'une interface de réseau pour une transaction à transmettre ;
- les informations de contrôle sont par exemple choisies parmi des données de types d'application associées à des données de types d'interface de réseau, des données de types de transaction associées à des données de types d'interface de réseau, des données de types d'application et de types de transaction associées à des données de types d'interface de réseau, des données représentatives du poids des données à transmettre à une application interne associées à des données de types d'interface de réseau, et des données d'informations de réseau associées à des données de types d'interface de réseau ;
- en présence d'un réseau fédérateur à protocole Internet (IP), ses moyens de contrôle peuvent être chargés de communiquer avec chaque application interne au moyen d'un protocole de transport choisi parmi UDP, TCP/IP et SCTP;
   ➢ ses moyens de contrôle peuvent être chargés de communiquer avec chaque application externe au moyen d'un protocole de transport d'hypertextes (ou HTTP (pour « HyperText Transmission Protocol »)).

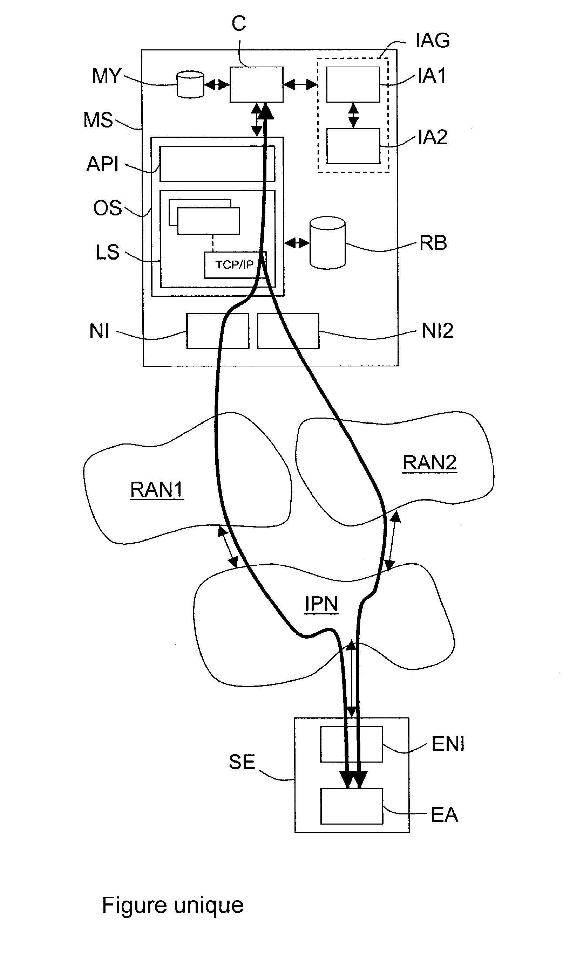

D'autres caractéristiques et avantages de l'invention apparaîtront à l'examen de la description détaillée ci-après, et du dessin annexé, sur lequel l'unique figure illustre de façon très schématique un terminal bimodes selon l'invention, couplé à un serveur d'applications externes via deux réseaux d'accès radio et un réseau fédérateur. Le dessin annexé pourra non seulement servir à compléter l'invention, mais aussi contribuer à sa définition, le cas échéant.

L'invention a pour objet de permettre la sélection automatique des réseaux d'accès radio au niveau des terminaux mobiles de radiocommunication multimodes pendant les sessions de service.

Dans ce qui suit, on considère à titre d'exemple non limitatif que les terminaux mobiles de radiocommunication multimodes sont des ordinateurs portables bimodes équipés d'une carte PCMCIA WiFi et d'une carte de téléphonie mobile UMTS. Mais, bien entendu, l'invention n'est pas limitée à cette seule application. Elle concerne en effet tous les terminaux de communication mobiles ou portables, multimodes, capables d'échanger des données sous la forme de signaux radio soit avec un autre terminal ou équipement de réseau, via leur(s) réseau(x) de rattachement, soit avec son propre réseau de rattachement. II pourra donc s'agir, par exemple, de téléphones mobiles ou d'assistants personnels numériques (ou PDA) multimodes. Par ailleurs, l'invention n'est pas limitée aux terminaux bimodes de type UMTS/WiFi. Elle concerne en effet tous les terminaux mobiles capables d'accéder à au moins deux réseaux d'accès radio de types différents grâce à au moins deux interfaces de réseau correspondant auxdits types différents et disposant chacune d'une adresse propre. Ainsi, l'invention concerne les combinaisons d'interfaces de réseau GSM et/ou GPRS/EDGE et/ou UMTS (ou HSDPA) et/ou WLAN (Wireless Local Area Network, comme par exemple Hyperlan (selon la norme ETSI) ou 802.11 (selon la norme IEEE)) et/ou WMAN (Wireless Metropolitan Area Network, comme par exemple 802.16 selon la norme IEEE) et/ou Bluetooth, notamment.

Dans l'exemple illustré sur l'unique figure, le terminal mobile multimodes (par exemple un ordinateur portable) MS comprend classiquement :
- un système d'exploitation (ou « operating System ») OS, par exemple de type Windows ou Linux, comportant notamment une interface de programmation d'application API et une pile de couches LS dont une couche de transport, par exemple de type TCP/IP,
- une base de données RB, couplée au système d'exploitation OS, et dans laquelle se trouvent stockées des données de routage, définissant des routes (ou chemins) permettant d'accéder à des équipements distants désignés par des adresses (dites de destination), par exemple de type IP, et agencées sous la forme d'une table de routage. Plus précisément, chaque entrée de la table de routage est une adresse de destination,
- un ensemble IAG d'au moins une application interne IA1 permettant d'échanger des données avec au moins une application externe EA implantée dans un équipement de réseau distant SE. Par exemple, l'application interne IA est un navigateur Internet (ou « web browser »), couplé à une autre application interne IA2 dédiée à la lecture de vidéos, et l'application externe EA est une application dédiée à la transmission de vidéos (ou « video streaming »), et
- au moins deux interfaces réseau NI1 et NI2 couplées au système d'exploitation OS, disposant chacune d'une adresse, par exemple de type adresse IP, et pouvant être respectivement connectées à deux réseaux d'accès radio RAN1 et RAN2, de types différents, par exemple UMTS dans le cas de RAN1 et WiFi dans le cas de RAN2.

Les deux réseaux d'accès radio RAN1 et RAN2 sont par ailleurs raccordés à un réseau fédérateur IPN, par exemple à protocole Internet (ou IP) tel que le réseau Internet.

L'équipement de réseau distant SE est également connecté au réseau fédérateur IPN. II s'agit par exemple d'un serveur d'applications disposant d'une adresse, par exemple de type adresse IP, et contenant au moins l'application externe EA.

Selon l'invention, le terminal multimodes MS comprend également un module de contrôle CM assurant une fonction « proxy » d'interfaçage entre l'ensemble IAG d'applications internes IA1 et IA2 et les applications externes EA.

Comme indiqué précédemment, la définition de la fonction proxy est ici celle donnée par l'IETF. Par conséquent, il s'agit d'un module logiciel (ou informatique) et/ou d'un circuit électronique intercalé entre des applications internes (ici IA1 et IA2) et des applications externes (ici EA) et se faisant passer pour une application auprès d'une autre application, et réciproquement.

Ce module de contrôle CM (à fonction proxy) est chargé, chaque fois qu'une application interne IAi (ici i = 1 ou 2) lui transmet une demande de transaction de service désignant une application externe EA, pendant une session de service, de déterminer parmi les interfaces de réseau NIj (ici j = 1 ou 2) celle qui est adaptée à cette transaction en fonction d'informations de contrôle et d'informations de routage.

On entend ici par « informations de routage » des données de routage stockées dans la table de routage de la base de données RB, ainsi que des données de disponibilité signalant si les interfaces de réseau NIj sont effectivement connectées ou non aux réseaux d'accès radio correspondants RANj.

Les échanges entre une application interne IAi et le module de contrôle CM peuvent par exemple se faire conformément à un protocole de transport tel qu'UDP (« User Datagram Protocol ») ou TCP/IP (« Transmission Control Protocol / Internet Protocol ») ou encore SCTP (« Streaming Control Transport Protocol »), notamment.

Le module de contrôle CM dispose d'une adresse interne (désignée par l'expression anglaise « loop back address » par l'homme de l'art), telle que « 127.0.0.1 » dans le cas IPv4 (version n°4 du protocole Internet (IP)). Cette adresse interne, qui désigne le numéro de port du module de contrôle CM, est connue de chaque application interne IAi de l'ensemble IAG. Elle est intégrée dans l'entête des paquets IP contenant la demande de transaction à transmettre, tout comme l'adresse de destination désignant l'équipement de réseau SE contenant l'application externe EA concernée par la transaction demandée.

Le module de contrôle CM accède aux données de routage en adressant des commandes systèmes au système d'exploitation OS qui est couplé à la base de données RB dans laquelle se trouve stockée la table de routage. Par ailleurs, le module de contrôle CM accède aux données de disponibilité en adressant des commandes systèmes au système d'exploitation OS, et plus précisément à son API.

On entend ici par « informations de contrôle » toutes données spécifiant un type d'interface de réseau NIj à utiliser en correspondance d'un type d'application interne et/ou d'un type de transaction et/ou d'informations de réseau.

Le type d'une transaction désigne non seulement une ou des opérations à effectuer, mais également ce que l'homme de l'art appelle la sémantique de service, laquelle est associée à la transaction. La désignation d'une opération à effectuer peut par exemple comporter des informations relatives au poids d'un fichier vidéo à télécharger.

Les informations de réseau peuvent être par exemple des données d'informations représentatives des coûts d'accès aux différents réseaux d'accès radio RANj, ou bien des données d'informations de répartition de charge (ou « load balancing »).

Les informations de contrôle définissent en quelque sorte une table qui fait correspondre une interface de réseau Nlj donnée à une situation donnée, définie par une application interne désignée et/ou une transaction demandée et/ou des informations de réseau. Ainsi, chaque fois que le module de contrôle CM reçoit une demande de transaction à transmettre à une application externe EA, il détermine la situation présente (définie par les informations de contrôle dont il dispose) et sélectionne l'interface de réseau Nlj qui correspond à cette situation et que le système d'exploitation OS doit utiliser pour transmettre cette demande de transaction à l'application externe EA désignée, sous réserve qu'elle soit disponible.

Les informations de contrôle peuvent être stockées dans des moyens de mémorisation MY, qui peuvent se présenter sous n'importe quelle forme, et notamment sous la forme d'une mémoire ou d'une base de données.

Une partie au moins des informations de contrôle peut être communiquée, par téléchargement (« ou downloading »), par un équipement de réseau auxiliaire distant (non représenté) appartenant, par exemple, à l'opérateur du (ou des) réseau(x) de communication au(x)quel(s) est abonné l'utilisateur du terminal multimodes MS.

Le téléchargement d'informations de contrôle peut se faire à l'initiative de l'équipement de réseau auxiliaire, par exemple périodiquement ou chaque fois qu'un événement survient dans le réseau ou lorsque de nouvelles applications internes ou externes sont commercialisées. Mais, on peut également envisager que le téléchargement d'informations de contrôle se fasse à l'initiative du module de contrôle CM, par exemple périodiquement, ou chaque fois qu'une application interne d'un type nouveau est implantée dans le terminal multimodes MS ou qu'une application externe inconnue est désignée, ou encore chaque fois qu'il reçoit une demande de transaction à transmettre (dans ce cas, aucune donnée d'information de contrôle n'est stockée dans le terminal multimodes MS et le module de contrôle CM n'a plus qu'à vérifier la disponibilité de l'interface de réseau NIj qui lui est proposée par l'équipement de réseau auxiliaire).

En variante ou en complément, une partie au moins des informations de contrôle peut être stockée dans le terminal multimodes MS lors de l'implantation du module de contrôle CM.

On peut également envisager une version basique de l'invention dans laquelle les informations de contrôle se résument à une table de correspondance dans laquelle chaque type d'application est associé à un type d'interface de réseau. Dans ce cas, les informations de contrôle peuvent éventuellement faire directement partie du module de contrôle CM.

Une fois que le module de contrôle CM a sélectionné l'interface de réseau NIj adaptée à la situation (grâce aux informations de contrôle dont il dispose), il adresse préférentiellement des commandes systèmes au système d'exploitation OS afin de vérifier parmi les informations de routage, qui sont stockées dans la table de routage de la base de données RB, si elle contient déjà une route définissant une connexion de niveau transport (socket) entre l'interface de réseau sélectionnée Nlj et l'équipement de réseau SE contenant l'application externe EA qui est concernée par la transaction demandée. En d'autres termes, le module de contrôle CM vérifie si l'une des entrées de la table de routage est constituée par une adresse (IP) de destination désignant l'équipement de réseau SE qui contient l'application externe EA concernée par la transaction demandée.

Il est important de noter que l'adresse de destination n'est pas obligatoirement celle de l'équipement de réseau SE. Il peut en effet s'agir d'une adresse d'un réseau auquel est raccordé l'équipement de réseau SE ou d'une partie de ce réseau.

Si la route est définie dans la table de routage, alors le module de contrôle CM procède préférentiellement à la vérification de la disponibilité de l'interface de réseau NIj qu'il a sélectionnée. On entend ici par « disponibilité » le fait que l'interface de réseau NIj soit utilisable (ou « enable »). Il peut en effet arriver qu'une interface de réseau ait perdu la connectivité avec le réseau. Pour ce faire, le module de contrôle CM adresse préférentiellement des commandes systèmes au système d'exploitation OS, et plus précisément à son interface de connexion API (ou socket API). Des commandes systèmes telles que « IPCONFIG » (pour Windows) et « IFCONFIG » (pour Linux) permettent en effet à une fonction proxy interne (ici CM) de connaître l'état de disponibilité des interfaces de réseau NIj et leurs identifiants.

Si l'interface de réseau NIj sélectionnée est effectivement disponible, alors le module de contrôle CM considère qu'elle constitue l'interface de réseau déterminée. Il ordonne alors au système d'exploitation OS de transmettre la demande de transaction à l'application externe désignée EA, via la connexion de niveau transport (ou socket) établie entre l'interface de réseau déterminée Nlj et l'équipement de réseau SE qui contient cette application externe EA.

Par exemple, le module de contrôle CM transmet ses ordres au système d'exploitation OS au moyen d'un protocole de transport d'hypertextes tel que HTTP (pour « HyperText Transmission Protocol »), adapté aux communications avec les applications externes EA.

Si l'interface de réseau Nlj sélectionnée n'est pas disponible, alors le module de contrôle CM doit en sélectionner une autre.

Si la route permettant d'atteindre l'application externe demandée EA n'est pas définie dans la table de routage, alors le module de contrôle CM adresse préférentiellement des commandes systèmes au système d'exploitation OS afin qu'il crée cette route et intègre sa définition dans la table de routage de la base de données RB. Des commandes systèmes telles que « ROUTE ADD IP@ mask NI-identifier » permettent en effet d'intégrer de nouvelles entrées dans la table de routage. II existe également des commandes systèmes permettant de supprimer des entrées dans la table de routage.

Une fois que la route a été intégrée dans la table de routage, alors le module de contrôle CM procède préférentiellement à la vérification de la disponibilité de l'interface de réseau NIj qu'il a sélectionnée. Puis, si l'interface de réseau NIj sélectionnée est effectivement disponible, alors le module de contrôle CM considère qu'elle constitue l'interface de réseau déterminée. II ordonne alors au système d'exploitation OS de transmettre la demande de transaction à l'application externe désignée EA, via la connexion de niveau transport (ou socket) établie entre l'interface de réseau déterminée NIj et l'équipement de réseau SE qui contient cette application externe EA. Dans le cas contraire (interface de réseau indisponible), le module de contrôle CM doit sélectionner une autre interface de réseau (disponible).

Il est important de noter que le module de contrôle CM peut être implanté dans le terminal multimodes MS lors de sa fabrication. Mais, il peut également être implanté par téléchargement (« ou downloading ») en provenance d'un équipement de réseau auxiliaire distant (non représenté), éventuellement celui qui peut fournir des informations de contrôle. Dans ce cas, le module de contrôle CM peut par exemple se présenter sous la forme de ce que l'homme de l'art appelle un « proxylet ». Ce téléchargement peut par exemple se faire à l'initiative de l'opérateur du (ou des) réseau(x) de communication au(x)quel(s) est abonné l'utilisateur du terminal multimodes MS, par exemple consécutivement à l'adhésion de l'utilisateur à une option de sélection automatique de réseau d'accès radio.

D'une manière générale, le module de contrôle CM du terminal mobile multimodes MS, ainsi que son éventuelle mémoire MY, peuvent être réalisés sous la forme de circuits électroniques, de modules logiciels (ou informatiques), ou d'une combinaison de circuits et de logiciels.

Trois exemples d'applications, non limitatifs, sont brièvement décrits ci-après.

Un premier exemple d'application concerne la sélection d'interfaces de réseau d'accès radio en fonction du type de transaction à transmettre. On suppose dans cet exemple que le terminal multimodes MS peut accéder aux réseaux sans fil à couverture discontinue (« Discontinuous coverage ») et aux réseaux mobiles UMTS. Il est rappelé que les accès dits à couverture discontinue ont été conçus pour offrir un très haut débit de données à bas coût pour des trafics non interactifs (et donc des transactions qui ne sont pas en temps réel) et relativement longs, tels que le streaming et les flux de données dites d'arrière plan (ou « background data »). Par ailleurs, l'accès UMTS est bien adapté aux transactions interactives, relativement courtes.

Pendant une session de streaming, les deux accès peuvent être utilisés selon le type de transaction à transmettre. Ainsi, le module de contrôle CM peut décider, d'une part, de transmettre par l'interface de réseau UMTS les messages de type RTSP (pour « Real Time Streaming Protocol »), qui contiennent des transactions permettant notamment de sélectionner un fichier à visualiser, d'échanger des paramètres, de configurer des connexions, ou de demander l'arrêt d'une vidéo ou un retour en arrière, et d'autre part, de transmettre les flux de données vidéo par l'interface de réseau dédiée à la couverture discontinue. Le choix effectué par le module de contrôle CM peut également prendre en compte d'autres informations de contrôle, comme par exemple les coûts d'accès aux deux réseaux d'accès radio et/ou le poids (en terme d'octets) des fichiers vidéo à télécharger.

Un deuxième exemple d'application concerne la sélection d'interfaces de réseau d'accès radio en fonction d'informations de répartition de charge (ou « load balancing »). On suppose ici qu'un utilisateur navigue sur Internet au moyen du navigateur NI1, implanté dans son terminal multimodes MS, et connecté au réseau Internet via un réseau d'accès local sans fil (WLAN) constitué de « hot spots » dont les accès sont presque saturés. Pour éviter que la qualité de la navigation se dégrade, du fait de la saturation des hot spots, le module de contrôle CM peut décider de changer d'interface de réseau, et donc de réseau d'accès, au moins momentanément, pour transmettre les messages de type « HTTP GET » provenant du navigateur NI1.

Un troisième exemple d'application concerne la sélection d'interfaces de réseau d'accès radio en fonction du type d'application interne utilisée. Le module de contrôle CM d'un terminal multimodes MS peut par exemple être configuré de sorte que les applications internes de voix sous IP (VoIP) utilisent toutes l'interface de réseau connectée au réseau d'accès radio UMTS, tandis que l'application interne de navigation Internet utilise l'interface de réseau connectée à un réseau d'accès local sans fil (WLAN).

L'invention ne se limite pas aux modes de réalisation de terminal mobile multimodes décrits ci-avant, seulement à titre d'exemple, mais elle englobe toutes les variantes que pourra envisager l'homme de l'art dans le cadre des revendications ci-après.

## Revendications

1. Terminal mobile de radiocommunication (MS), comprenant un système d'exploitation (OS), au moins une application interne (IA1) propre à échanger des données avec au moins une application externe (EA) implantée dans un équipement de réseau (SE), au moins deux interfaces réseau (NI1,NI2) couplées audit système d'exploitation (OS), disposant chacune d'une adresse et propres à être respectivement connectées à des réseaux d'accès radio (RAN1,RAN2), de types différents et raccordés à un réseau fédérateur (IPN) auquel est couplé ledit équipement de réseau (SE), **caractérisé en ce qu'**il comprend des moyens de contrôle (CM) assurant une fonction « proxy » d'interfaçage entre applications interne (IA1) et externe (EA) et agencés, en cas de réception d'une demande de transaction provenant de ladite application interne (IA1) et désignant une application externe (EA), pour déterminer parmi lesdites interfaces de réseau (NI1,NI2) celle qui est adaptée à ladite transaction en fonction d'informations de contrôle et d'informations de routage, puis pour ordonner audit système d'exploitation (OS) de transmettre ladite demande de transaction à ladite application externe (EA) désignée via une connexion de niveau transport entre ladite interface de réseau déterminée et l'équipement de réseau (SE) contenant ladite application externe (EA).

2. Terminal mobile selon la revendication 1, **caractérisé en ce que** lesdits moyens de contrôle (CM) sont agencés i) pour sélectionner une interface de réseau (NIj) en fonction desdites informations de contrôle, puis ii) pour vérifier parmi lesdites informations de routage, stockées dans une table de routage dudit terminal (MS), s'il existe une route impliquant ladite interface de réseau sélectionnée et l'équipement de réseau (SE) contenant ladite application externe (EA) concernée par ladite transaction demandée, et iii) soit pour identifier ladite interface de réseau déterminée à ladite interface de réseau sélectionnée si ladite route est définie, soit pour ordonner le stockage dans ladite table de routage d'informations de routage définissant ladite route si cette dernière n'y est pas encore définie, puis identifier ladite interface de réseau déterminée à ladite interface de réseau sélectionnée et ordonner audit système d'exploitation (OS) de créer la connexion de niveau transport correspondant à cette route.

3. Terminal mobile selon la revendication 2, **caractérisé en ce qu'**en cas d'indisponibilité de ladite interface de réseau sélectionnée (NI1), lesdits moyens de contrôle (CM) sont agencés pour déterminer une autre interface de réseau (NI2) en fonction desdites informations de contrôle et desdites informations de routage.

4. Terminal mobile selon l'une des revendications 1 à 3, **caractérisé en ce que** lesdits moyens de contrôle (CM) sont agencés pour déterminer ladite interface de réseau (Nlj) par transmission de commandes systèmes audit système d'exploitation (OS).

5. Terminal mobile selon l'une des revendications 1 à 4, **caractérisé en ce que** lesdits moyens de contrôle (CM) sont agencés sous la forme d'une application logicielle de type proxy téléchargeable, et **en ce que** ledit système d'exploitation (OS) est agencé i) pour recevoir ladite application logicielle de type proxy (CM) d'un équipement de réseau auxiliaire distant, puis ii) pour implanter cette application logicielle de type proxy (CM) dans ledit terminal (MS) à une adresse interne choisie, et iii) pour communiquer ladite adresse interne choisie à chaque application interne (IA1) de sorte qu'elle puisse communiquer avec ladite application logicielle de type proxy (CM).

6. Terminal mobile selon l'une des revendications 1 à 5, **caractérisé en ce que** lesdites données de contrôle sont stockées dans un équipement de réseau auxiliaire distant, et **en ce que** lesdits moyens de contrôle (CM) sont agencés pour requérir auprès dudit système d'exploitation (OS) l'établissement d'une connexion de signalisation entre ledit terminal (MS) et cet équipement de réseau auxiliaire de sorte que ce dernier puisse leur transmettre lesdites données de contrôle.

7. Terminal mobile selon la revendication 6, **caractérisé en ce que** lesdits moyens de contrôle (CM) sont agencés pour requérir lesdites données de contrôle auprès dudit équipement de réseau auxiliaire, via ladite connexion de signalisation, de manière à les stocker dans des moyens de mémorisation (MY) dudit terminal (MS).

8. Terminal mobile selon la revendication 6, **caractérisé en ce que** lesdits moyens de contrôle (CM) sont agencés pour stocker dans des moyens de mémorisation (MY) dudit terminal (MS) lesdites données de contrôle transmises par ledit équipement de réseau auxiliaire via ladite connexion de signalisation.

9. Terminal mobile selon la revendication 6, **caractérisé en ce que** lesdits moyens de contrôle (CM) sont agencés pour requérir auprès dudit équipement de réseau auxiliaire, via ladite connexion de signalisation, lesdites données de contrôle nécessaires à la détermination d'une interface de réseau (Nlj) pour une transaction à transmettre.

10. Terminal mobile selon l'une des revendications 1 à 9, **caractérisé en ce que** lesdites informations de contrôle sont choisies dans un groupe comprenant au moins des données de types d'application associées à des données de types d'interface de réseau, des données de types de transaction associées à des données de types d'interface de réseau, des données de types d'application et de types de transaction associées à des données de types d'interface de réseau, des données représentatives du poids des données à transmettre à une application interne associées à des données de types d'interface de réseau, et des données d'informations de réseau associées à des données de types d'interface de réseau.

11. Terminal mobile selon l'une des revendications 1 à 10, **caractérisé en ce qu'**en présence d'un réseau fédérateur (IPN) à protocole Internet (IP), lesdits moyens de contrôle (CM) sont agencés pour communiquer avec chaque application interne (IA1) au moyen d'un protocole de transport choisi parmi UDP, TCP/IP et SCTP.

12. Terminal mobile selon la revendication 11, **caractérisé en ce que** lesdits moyens de contrôle (CM) sont agencés pour communiquer avec chaque application externe (EA) au moyen d'un protocole de transport d'hypertextes (HTTP).
